# EUROPÄISCHE PATENTSCHRIFT

(11) **EP 3 377 771 B1**
(45) Veröffentlichungstag und Bekanntmachung des Hinweises auf die Patenterteilung: **09.03.2022**
(21) Anmeldenummer: 16794655.7
(22) Anmeldetag: 14.11.2016
(51) Int. Cl.: F04D 15/02, F04D 29/58

(54) **SCHALTUNG EINER PUMPE IN ABHÄNGIGKEIT DES DURCHSATZES, WOBEI DER DURCHSATZ DURCH EINEN THERMISCHEN DURCHFLUSSMESSER BESTIMMT WIRD**
PUMP SWITCHING DEPENDING ON THE FLOW RATE, WHEREIN THE FLOW RATE IS DETECTED BY A THERMAL FLOWMETER
COMMUTATION D'UNE POMPE EN FONCTION DU DÉBIT, LEDIT DÉBIT ÉTANT DÉTECTÉ PAR UN DÉBIMÈTRE THERMIQUE

(30) Priorität: 17.11.2015 DE 102015119832
(43) Veröffentlichungstag der Anmeldung: 26.09.2018
(73) Patentinhaber: Xylem Europe GmbH, 8200 Schaffhausen (CH)
(72) Erfinder: LAING, Oliver, 71083 Herrenberg (DE)
(74) Vertreter: Lenzing Gerber Stute
(86) Internationale Anmeldenummer: PCT/EP2016/077584
(87) Internationale Veröffentlichungsnummer: WO 2017/085016

(56) Entgegenhaltungen:
- EP-A1- 1 241 357
- EP-A1- 1 496 340
- DE-A1- 3 637 497
- DE-A1- 19 741 547

## Beschreibung

Die Erfindung betrifft eine Förderpumpe zur Druckerhöhung in einer Leitung.

Weiterhin betrifft die Erfindung ein Verfahren zum Betreiben einer Förderpumpe, welche an eine Leitung angeschlossen ist.

Aus der DE 199 14 581 A1 ist ein Kreiselpumpenaggregat bekannt, mit einem innerhalb eines Pumpengehäuses im Strömungsweg des Förderfluids angeordneten Strömungswächter. Dieser besteht aus einer elektromagnetischen Schaltvorrichtung und einem zweiarmigen, schwenkbar gelagerten Hebel, dessen einer Arm in den Strömungsweg ragt und dessen anderer Arm einen Magneten trägt, der mit der Schaltvorrichtung in berührungsfreier Wirkverbindung steht, wobei die Schaltvorrichtung innerhalb eines am Aggregatgehäuse angebrachten Klemmenkastens angeordnet ist. Der den Magneten tragende Teil des Hebels ist von einem nach außen hermetisch abgeschlossenen Wächtergehäuse umgeben, welches vom Klemmenkasten getrennt und zu diesem benachbart angeordnet ist.

Aus der US 7,044,714 B2 ist ein Kontroller zur Steuerung/Regelung einer Pumpeneinheit einer Ölquelle bekannt.

Aus der US 6,527,517 B1 ist eine Pumpe für einen Kühlungskreislauf eines Verbrennungsmotors bekannt.

Aus der DE 203 12 618 U1 ist ein Dampfreinigungsgerät bekannt.

Aus der US 8,747,075 B1 ist eine Vorrichtung zur Überwachung von Fluidniveaus bekannt.

Aus der US 8,245,628 B2 ist eine Kaffeemaschine bekannt. Weitere Druckschriften, die zum technischen Hintergrund der vorliegenden Erfindung gehören, sind EP 1 496 340 A1, DE 197 41 547 A1 und DE 36 37 497 A1.

Der Erfindung liegt die Aufgabe zugrunde, eine Förderpumpe der eingangs genannten Art bereitzustellen, welche bei konstruktiv einfachem Aufbau einen Strömungswächter umfasst.

Diese Aufgabe wird durch eine Förderpumpe nach Anspruch 1, durch ein Verfahren nach Anspruch 16 und durch eine Verwendung einer Pumpe nach Anspruch 1 entsprechend Anspruch 23 gelöst.

Es kann sinnvoll sein, dass in einem Wassersystem wie beispielsweise einem Brauchwassersystem (Trinkwassersystem) der Druck in einer Leitung erhöht wird. Beispielsweise stellt ein Wasserwerk nicht einen ausreichenden Druck bereit.

Wenn beispielsweise ein Heizgerät zur Aufheizung von Brauchwasser vorgesehen ist, dann ist es oftmals der Fall, dass das Heizgerät nur sinnvoll betrieben werden kann, wenn ein bestimmter Mindestdruck vorliegt.

Erfindungsgemäß wird eine Förderpumpe bereitgestellt, welche aufgrund mindestens eines integrierten Temperatursensors über die Auswertungseinrichtung ermitteln kann, ob eine Durchströmung von Förderflüssigkeit des Förderraums vorliegt oder nicht. Die Durchströmung von Förderflüssigkeit durch den Förderraum (zwischen einem Einlass des Förderraums und einem Auslass des Förderraums) entspricht einer Durchströmung der Leitung, in welcher eine Druckerhöhung stattfinden soll bzw. bei nicht durchströmtem Förderraum ist die Leitung nicht durchströmt (sofern Blockaden und dergleichen der Förderpumpe ausgeschlossen werden können).

Es hat sich gezeigt, dass bei entsprechender Auswertung von Temperatursignalen des mindestens einen Temperatursensors entsprechende Informationen gewonnen werden können, welche den Strömungsdurchfluss charakterisieren.

Diese Informationen können dabei sozusagen mit "Bordmitteln" der Förderpumpe gewonnen werden. Es sind insbesondere keine zusätzlichen mechanischen Elemente notwendig, die beispielsweise den Strömungsfluss behindern könnten, um einen Strömungswächter realisieren zu können. Eine konstruktive Modifikation der Förderpumpe zur Gewinnung der zusätzlichen Informationen ist minimal.

Durch Auswertung der entsprechenden durch den mindestens einen Temperatursensor bereitgestellten Daten kann die Auswertungseinrichtung erkennen, ob eine Durchströmung vorliegt oder nicht. Über diese Daten wiederum lässt sich ermitteln, ob die Förderpumpe abgeschaltet werden kann bzw. wieder eingeschaltet werden muss. Es ergibt sich dadurch ein optimierter energiesparender Betrieb; die Förderpumpe läuft nur dann, wenn dies notwendig ist. Die Auswertungseinrichtung mit dem mindestens einen Temperatursensor bildet einen Strömungswächter.

Wenn beispielsweise in einem Brauchwassersystem (Trinkwassersystem) ein Schieber geöffnet wird (indem beispielsweise eine Dusche eingeschaltet wird), dann erfolgt in der entsprechenden Leitung ein Durchfluss an Förderflüssigkeit (an Wasser). Die Förderpumpe kann dies erkennen und sie kann sich dann über die Auswertungseinrichtung bezüglich eines Pumpenbetriebs "selber anschalten". Wenn der Schieber wieder geschlossen wird, dann kann die Förderpumpe dies auch erkennen und sich gewissermaßen wieder "selber ausschalten".

Durch die erfindungsgemäße Lösung lässt sich für ein im gleichen Strang wie die Förderpumpe angeordnetes Heizgerät ein für dessen Betrieb ausreichender Druck erzeugen.

Es ist eine Temperiereinrichtung vorgesehen, welche dem mindestens einen Temperatursensor zugeordnet ist, und durch welche definierte Temperaturverhältnisse in einer Umgebung des mindestens einen Temperatursensors herstellbar sind. Durch die Temperiereinrichtung lässt sich die Temperatur in der Umgebung des mindestens einen Temperatursensors bei fehlender Durchströmung auf eine Temperatur erhöhen, die über der Temperatur des Fördermediums liegt; dadurch lässt sich eine einsetzende Durchströmung sicher erkennen.

Die Förderpumpe hat eine bestimmte und grundsätzlich bekannte thermische Masse und eine grundsätzlich bekannte Leistungsaufnahme bei einem Nulldurchsatz an Förderflüssigkeiten. Die Temperatur in der Umgebung des mindestens einen Temperatursensors ist bei fehlender Durchströmung höher als die Temperatur der durchströmenden Förderflüssigkeit. Durch die Temperiereinrichtung kann bei fehlender Durchströmung die Temperatur an dem mindestens einen Temperatursensor so weit erhöht werden, dass die Auswertungseinrichtung eine erneute Durchströmung an der Abkühlung des mindestens einen Temperatursensors erkennen kann.

Aus der bekannten thermischen Masse der Förderpumpe und aus der bekannten Leistungsaufnahme bei Nulldurchsatz ergibt sich eine (bestimmte) Steigung einer Temperaturerhöhung, die ein zuverlässiges Signal für das Fehlen einer Durchströmung darstellt, wobei eine gewisse Toleranz vorhanden sein kann und eine Beobachtung über einen bestimmten Zeitraum beispielsweise der Größenordnung einer Minute vorgesehen ist. Temperaturänderungen mit einer anderen Steigung sind Indikatoren für eine Durchströmung.

Eine erfindungsgemäße Förderpumpe kann insbesondere dann zum Einsatz kommen, wenn eine Infrastruktur nicht in der Lage ist, einen ausreichenden Wasserdruck (Druck der Förderflüssigkeit) zur Verfügung zu stellen.

Es kann auch vorkommen, dass eine Hauptwasserleitung in einem Haus nicht ausreichend isoliert ist und bei Sonneneinstrahlung das Brauchwasser erwärmt wird. Dies führt dann beispielsweise dazu, dass beim Duschen zunächst eine deutliche Erwärmung erfolgt, bevor kälteres Brauchwasser bei der Förderpumpe ankommt.

Bei stehender Förderpumpe ist es ein valider Indikator (und insbesondere der einzige valide Indikator), dass bei Vorliegen einer Durchströmung eine Temperaturkurve von einem konstanten, leicht abfallenden oder im Falle einer erhöhten Umgebungstemperatur leicht ansteigenden Wert abweicht. Bei Betrieb einer Temperiereinrichtung liegt im Regelfall ein Temperaturabfall vor.

Durch die erfindungsgemäße Lösung lässt sich jede Temperaturänderung, die nicht durch konvektive oder konduktive Abkühlung oder Aufheizung erklärt werden kann, als Durchströmung deuten.

Insbesondere ist ein Gehäuse vorgesehen, in welchem der Förderraum angeordnet ist, wobei der mindestens eine Temperatursensor innerhalb des Gehäuses angeordnet ist. Der mindestens eine Temperatursensor ist also in die Förderpumpe integriert. In dem Gehäuse ist ein Pumpenteil und ein Motorteil der Förderpumpe angeordnet. Es ist dabei grundsätzlich möglich, dass das Gehäuse einen Pumpen-Gehäuseteil und einen Motor-Gehäuseteil aufweist, welche insbesondere voneinander getrennt sind (und miteinander verbunden sind). Es kann ein Temperatursensor in dem Pumpen-Gehäuseteil und/oder in dem Motor-Gehäuseteil angeordnet sein.

Ganz besonders vorteilhaft ist es, wenn durch die Auswertungseinrichtung Aktivierungssignale zur Aktivierung eines Pumpenbetriebs und Deaktivierungssignale zur Deaktivierung eines Pumpenbetriebs bereitstellbar sind. Dadurch kann sich die Förderpumpe gewissermaßen selber nach Bedarf anschalten und ausschalten.

Es ist insbesondere ein Motor (und insbesondere Elektromotor) zum Antrieb eines Laufrads vorgesehen, wobei bei einer Ausführungsform der mindestens eine Temperatursensor an einem Motorgehäuse angeordnet ist. Bei entsprechender Anordnung lässt sich dann die Temperatur von Förderflüssigkeit in dem Förderraum ermitteln. Durch die Anordnung des mindestens einen Temperatursensors an (und insbesondere in) dem Motorgehäuse und dabei im Motor lassen sich Kabelverbindungen optimiert führen und gegebenenfalls sogar vermeiden. Es kann dadurch insbesondere sichergestellt werden, dass der Motor und ein Pumpengehäuse demontiert werden können.

Es kann auch alternativ oder zusätzlich vorgesehen sein, dass der mindestens eine Temperatursensor an oder in der Nähe einer Wandung des Förderraums angeordnet ist. Es lässt sich so auf einfache Weise eine Temperatur von Förderflüssigkeit in dem Förderraum detektieren.

Bei einer Ausführungsform umfasst der mindestens eine Temperatursensor eine Temperiereinrichtung, wobei insbesondere die Temperiereinrichtung in den mindestens einen Temperatursensor integriert ist. Der mindestens eine Temperatursensor umfasst beispielsweise ein Widerstandselement wie NTC-Element (Heißleiter) bzw. ist aus solch einem Widerstandselement gebildet, welches selber zum Temperieren genutzt wird. Wenn beispielsweise an einem NTC-Element eine Messspannung angelegt wird, kann eine Temperatur ermittelt werden. Wenn höhere Spannungen angelegt werden, wird das NTC-Element als Heizelement genutzt.

Es ist beispielsweise auch möglich, dass die Temperiereinrichtung durch mindestens ein Heizelement und insbesondere Widerstandselement gebildet ist oder mindestens ein Heizelement umfasst, welches insbesondere getrennt von dem mindestens einen Temperatursensor ist. Es lassen sich so definierte Temperaturverhältnisse einstellen.

Erfindungsgemäß ist vorgesehen, dass die Temperiereinrichtung durch eine oder mehrere Spulen eines Motors der Förderpumpe gebildet ist oder eine oder mehrere Spulen des Motors umfasst, wobei eine Wärmeleitungsverbindung zwischen der oder den Spulen und der Umgebung des mindestens einen Temperatursensors vorliegt. Es kann so insbesondere eine Abwärme eine Motors (und insbesondere Elektromotors) der Förderpumpe dazu genutzt werden, um eine Temperierung in der Umgebung des mindestens einen Temperatursensors durchzuführen. Beispielsweise kann ein Motorgehäuse selber die Wärmeleitungsverbindung herstellen; insbesondere Motorgehäuse aus Aluminium stellen eine gute Wärmeleitung bereit.

Es ist beispielsweise auch möglich, dass die Auswertungseinrichtung ein Temperierglied umfasst, welches für einen Betrieb der Förderpumpe ohne Durchfluss von Förderflüssigkeit für eine bestimmte Zeitdauer sorgt, um definierte Temperaturbedingungen in der Umgebung des mindestens einen Temperatursensors herzustellen. Beispielsweise kann die Förderpumpe bei fehlendem Durchfluss so lange betrieben werden, bis die Temperatur in der Umgebung des mindestens einen Temperatursensors durch die Erwärmung der Förderpumpe einen gewünschten Wert erreicht hat.

Erfindungsgemäß ist die Auswertungseinrichtung dazu ausgebildet, eine zeitliche Entwicklung der ermittelten Temperaturen auszuwerten. Aus dem Zeitverlauf der ermittelten Temperaturen lässt sich detektieren, ob eine Durchströmung des Förderraums (und damit der Leitung) vorliegt oder nicht. Es lässt sich dadurch ein "nicht-mechanischer" Strömungswächter realisieren.

Insbesondere stellt die Auswertungseinrichtung mindestens eine der folgenden Detektionsmöglichkeiten bereit: Durchfluss von Förderflüssigkeit, fehlender Durchfluss von Förderflüssigkeit.

Die entsprechenden Detektionsergebnisse können dazu genutzt werden, die Pumpentätigkeit der Förderpumpe zu aktivieren (wenn ein Durchfluss von Förderflüssigkeit erkannt wird) bzw. zu deaktivieren (wenn ein fehlender Durchfluss von Förderflüssigkeit erkannt wird). Dadurch lassen sich unnötige Pumpenlaufzeiten vermeiden und es ist ein energiesparender Betrieb möglich.

Insbesondere wird ein fehlender Durchfluss von Förderflüssigkeit aus einem zeitlichen Temperaturanstieg und insbesondere mindestens näherungsweise linearen zeitlichen Temperaturanstieg detektiert bzw. ist entsprechend detektierbar. Wenn die Förderpumpe aktiviert ist, das heißt im Pumpenbetrieb ist, und ein Schieber an der entsprechenden Leitung geschlossen wird, sodass keine Durchströmung mehr stattfinden kann, dann entsteht eine Wärmeentwicklung, welche zu einer Aufheizung von Förderflüssigkeit in dem Förderraum führt. Diese Aufheizung ist allein durch Pumpenparameter bestimmt, welche die thermische Masse der Förderpumpe und die Leistungsaufnahme bei Nulldurchsatz bestimmen. Diese Wärmeentwicklung ist nicht variabel. Der zeitliche Temperaturanstieg ist insbesondere mindestens näherungsweise zeitlich linear. Dieser Temperaturanstieg ist detektierbar und ist ein entsprechendes Anzeichen für einen fehlenden Durchfluss.

Ein Durchfluss an Förderflüssigkeit nach einer Phase ohne Durchfluss ist durch eine zeitliche Temperaturänderung und insbesondere durch einen zeitlichen Temperaturabfall detektierbar bzw. ist entsprechend detektiert. Ein solcher Durchfluss nach einer Phase ohne Durchfluss wird beispielsweise durch Öffnen eines Schiebers (an der Leitung) hergestellt. Der entsprechende zeitliche Temperaturabfall ist durch die Auswertungseinrichtung über die von dem mindestens einen Temperatursensor bereitgestellten Daten detektierbar und es können die entsprechenden Schlüsse durch die Auswertungseinrichtung automatisch gezogen werden. Allgemein lässt sich ein Durchfluss an Förderflüssigkeit nach einer Phase ohne Durchfluss durch eine Temperaturänderung detektieren, die von einer sehr langsamen Temperaturänderung deutlich abweicht.

Insbesondere generiert bei Detektion eines fehlenden Durchflusses die Auswertungseinrichtung ein Deaktivierungssignal für einen Pumpenbetrieb der Förderpumpe. Dadurch werden unnötige Pumpenlaufzeiten vermieden.

Das Deaktivierungssignal kann dabei insbesondere sofort nach Detektion des fehlenden Durchflusses generiert werden, oder das Deaktivierungssignal wird generiert, wenn eine bestimmte Temperaturschwelle erreicht ist. Die bestimmte Temperaturschwelle wird beispielsweise direkt über den mindestens einen Temperatursensor ermittelt, oder sie wird über den zeitlichen Verlauf berechnet.

Es ist ferner günstig, wenn bei Detektion eines Durchflusses nach einer Phase eines fehlenden Durchflusses die Auswertungseinrichtung ein Aktivierungssignal für einen Pumpenbetrieb der Förderpumpe generiert. Dadurch erfolgt dann ein Pumpenbetrieb, wenn die Notwendigkeit eines solchen Pumpenbetriebs erkannt wird, weil insbesondere ein Schieber geöffnet wurde.

Erfindungsgemäß wird ein Verfahren zum Betreiben einer erfindungsgemäßen Förderpumpe bereitgestellt, welche an eine Leitung angeschlossen ist, bei dem die Auswertungseinrichtung aus der zeitlichen Entwicklung von Temperatursignalen, welche der mindestens eine Temperatursensor innerhalb der Förderpumpe bereitstellt, detektiert, ob ein Durchfluss in der Leitung stattfindet oder nicht.

Die Vorteile des erfindungsgemäßen Verfahrens wurden bereits im Zusammenhang mit der erfindungsgemäßen Förderpumpe erläutert.

Durch die Förderpumpe selber lässt sich ohne mechanische Mittel feststellen, ob eine Durchströmung der Leitung, in welcher der Druck erhöht werden soll, vorliegt oder nicht. Dadurch ist es möglich, dass die Pumpe sich gewissermaßen selber anschaltet oder ausschaltet, je nach Bedarf.

Insbesondere stellt die Auswertungseinrichtung Aktivierungssignale zur Aktivierung eines Pumpenbetriebs der Förderpumpe und Deaktivierungssignale zur Deaktivierung eines Pumpenbetriebs bereit. Dadurch lässt sich die Förderpumpe optimal angepasst an die Durchströmungsverhältnisse der Leitung betreiben. Ob eine Durchströmung der Leitung vorliegt oder nicht, liegt außerhalb der Einflusssphäre der Pumpe. Wenn beispielsweise ein Schieber an der Leitung geöffnet wird, dann erfolgt eine Durchströmung. Wenn der Schieber an der Leitung geschlossen wird, dann wird die Durchströmung blockiert. Eine Durchströmung der Leitung bewirkt auch eine Durchströmung des Förderraums der Förderpumpe. Eine Blockierung der Durchströmung der Leitung bewirkt, dass der Förderraum der Förderpumpe nicht mehr durchströmt wird. Die Auswertungseinrichtung der Förderpumpe kann die Durchströmung bzw. fehlende Durchströmung der Leitung über Auswertung der Temperatursignale des mindestens einen Temperatursensors erkennen.

Insbesondere wird bei deaktivierter Förderpumpe, wenn ein Durchfluss durch die Leitung detektiert wird, ein Aktivierungssignal für die Förderpumpe generiert. Die Förderpumpe kann sich dadurch gewissermaßen selber anschalten.

Aus dem gleichen Grund ist es vorteilhaft, wenn die Auswertungseinrichtung bei aktivierter Förderpumpe, wenn ein fehlender Durchfluss in der Leitung detektiert wird, ein Deaktivierungssignal für die Förderpumpe generiert. Die Förderpumpe kann sich dadurch gewissermaßen selber abschalten.

Insbesondere wird, wenn die Umgebung des mindestens einen Temperatursensors durch eine Temperiereinrichtung erwärmt wurde, eine Durchströmung der Leitung aus einem zeitlichen Temperaturabfall, gemessen an der Förderpumpe, detektiert. Es lässt sich dadurch eine Durchströmung der Leitung allein durch Messung innerhalb der Förderpumpe erkennen. Es müssen keine mechanischen Sensoren oder dergleichen vorgesehen werden. Der Strömungsdurchfluss selber wird durch die Messung nicht behindert. Es kann auch grundsätzlich vorkommen, dass die Temperatur bei beginnender Durchströmung zunächst ansteigt, wenn das Brauchwasser vor der Förderpumpe durch äußere Einflüsse oder fehlende Isolation erwärmt wurde. Auch ein solcher Temperaturverlauf bedeutet, dass eine Durchströmung stattfindet.

Entsprechend ist es günstig, wenn ein fehlender Durchfluss in der Leitung aus einem zeitlichen und insbesondere mindestens näherungsweise zeitlich linearen Temperaturanstieg, gemessen in der Förderpumpe detektiert wird. Dieser zeitliche Anstieg ist allein bestimmt durch Pumpenparameter und insbesondere durch die thermische Masse der Förderpumpe und die Leistungsaufnahme bei Nulldurchsatz. Dadurch ist es auf einfache Weise möglich, die Förderpumpe abzuschalten, wenn ein Pumpenbetrieb nicht benötigt wird.

Es kann vorgesehen sein, dass die Temperiereinrichtung bei Unterschreiten einer bestimmten Temperatur, welche noch zur Detektion einer Durchströmung ausreichend ist, aktiviert wird. Dadurch wird, wenn die Förderpumpe sich nach Temperierung langsam abkühlen sollte, ein Nachheizen bewirkt. Es ist dabei grundsätzlich möglich, dass, wenn eine Umgebung der Förderpumpe auf einem Temperaturniveau liegt, welches deutlich über der Temperatur der Förderflüssigkeit liegt, die ganze Einheit sich bei Nichtgebrauch deutlich über eine Temperatur erwärmt, die die Temperiereinrichtung vorgibt.

Die erfindungsgemäße Förderpumpe bzw. das erfindungsgemäße Verfahren lässt sich vorteilhaft zur Druckerhöhung in einer Leitung eines Brauchwassersystems verwenden. Insbesondere wird die Förderpumpe bzw. das Verfahren verwendet, um einem Heizgerät für Brauchwasser Wasser auf den für den Heizbetrieb notwendigen Druck bereitzustellen.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung einer Anordnung einer Förderpumpe an einer Leitung mit Schieber;
- Figur 2: eine schematische Schnittansicht eines Ausführungsbeispiels einer erfindungsgemäßen Förderpumpe;
- Figur 3: Temperatursignale bei unterschiedlichen Anordnungen eines Temperatursensors in der Förderpumpe gemäß Figur 2 in ihrer zeitlichen Entwicklung bei unterschiedlichen Stellungen eines Schiebers, wobei die Förderpumpe deaktiviert ist;
- Figur 4: ein ähnliches Diagramm wie in Figur 3 bei unterschiedlichen Stellungen des Schiebers und Aktivierung der Förderpumpe;
- Figur 5: eine schematische Darstellung eines Ausführungsbeispiels einer Temperiereinrichtung;
- Figur 6: ein weiteres Ausführungsbeispiel einer Temperiereinrichtung; und
- Figur 7: ein weiteres Ausführungsbeispiel einer Temperiereinrichtung.

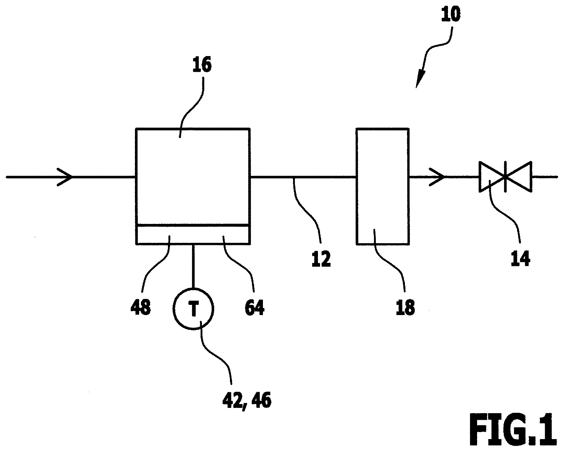

Ein Ausführungsbeispiel eines Brauchwassersystems, welches in Figur 1 in einer Teildarstellung gezeigt ist und dort mit 10 bezeichnet ist, umfasst eine Leitung 12, an welcher ein Schieber 14 angeordnet ist. Der Schieber 14 ist beispielsweise an einer Dusche angeordnet. Wenn der Schieber 14 geöffnet wird, dann tritt an der Dusche Wasser aus.

An der Leitung 12 ist eine Förderpumpe 16 angeordnet. Die Förderpumpe 16 dient zur Druckerhöhung in der Leitung 12, insbesondere wenn der von einem Wasserwerk bereitgestellte Druck nicht ausreichend ist.

Es ist auch möglich, dass das Brauchwassersystem 10 ein Heizgerät 18 aufweist, welches zur Aufheizung von Wasser dient, welches beispielsweise einer Dusche zugeführt wird. Oft ist es erforderlich, dass für eine ordnungsgemäße Funktionsweise des Heizgerätes 18 das zu heizende Wasser einen Mindestdruck aufweist. Die Förderpumpe 16 kann einen solchen Mindestdruck bereitstellen, auch wenn ein Wasserwerk keinen ausreichenden Druck bereitstellt.

Ein Ausführungsbeispiel einer Förderpumpe 16 (Umwälzpumpe) ist beispielsweise aus der DE 10 2007 054 313 A1 oder der US 2009/0121034 bekannt. Auf diese Dokumente wird ausdrücklich und vollinhaltlich Bezug genommen.

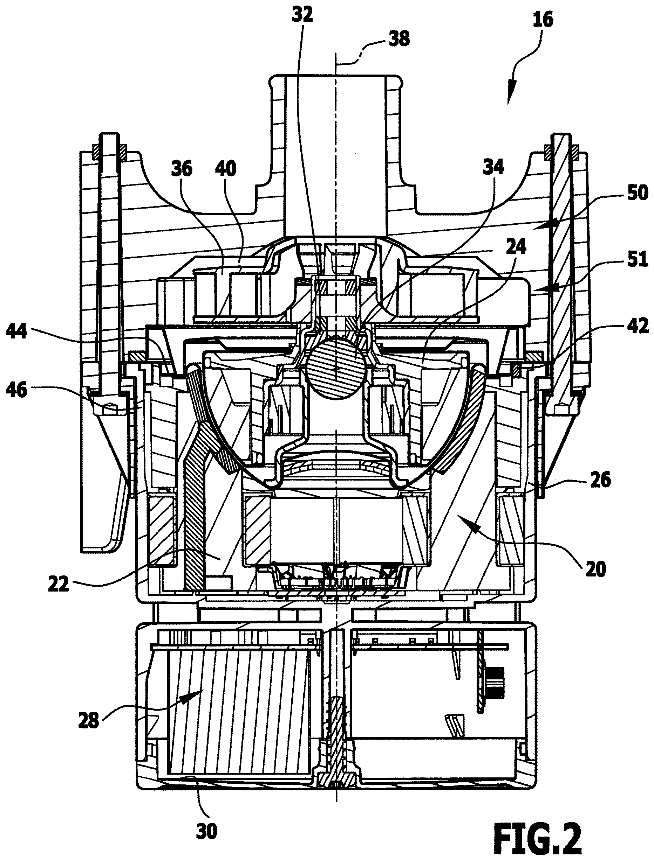

Die Pumpe 16 (Figur 2) umfasst einen Elektromotor 20 mit einem Stator 22 und einem Rotor 24.

Der Elektromotor 20 weist ein Motorgehäuse 26 auf, in welchem der Stator 22 und der Rotor 24 angeordnet sind.

Der Elektromotor 20 weist ferner eine Motorschaltung 28 auf. Die Motorschaltung 28 ist in einem Schaltungsgehäuse 30 angeordnet. Das Schaltungsgehäuse 30 kann dabei, wie in Figur 2 gezeigt, getrennt von dem Motorgehäuse 26 sein oder mittels des Motorgehäuses 26 gebildet sein.

Der Rotor 24 ist über eine Lagerschale 32 an einem konvexen Lagerkörper 34, welcher insbesondere als Lagerkugel beispielsweise aus einem Keramikmaterial ausgebildet ist, gelagert. Über den Lagerkörper 34 und die Lagerschale 32 ist ein sphärisches Lager gebildet.

Ein Laufrad 36 ist drehfest mit dem Rotor 24 verbunden. Das Laufrad 36 rotiert um eine Rotationsachse 38 in einem Förderraum 40. Der Förderraum 40 ist von Förderflüssigkeit durchströmbar, wobei im Pumpenbetrieb die Durchströmung durch das Laufrad 36 angetrieben ist. Wenn der Förderraum 40 von Förderflüssigkeit durchströmt ist, dann strömt auch Förderflüssigkeit in der Leitung 12. Die Pumpe kann dabei auch in Betrieb sein (aktiviert sein), wenn keine Durchströmung der Leitung 12 und damit des Förderraums 40 vorliegt; wenn der Schieber 14 geschlossen ist, dann kann keine Förderflüssigkeit durch den Förderraum 40 und die Leitung 12 hindurch transportiert werden, wobei aber der Rotor 24 mit dem Laufrad 36 bei aktivierter Förderpumpe 16 rotiert.

Die Förderpumpe 16 umfasst einen Temperatursensor 42.

Der Temperatursensor 42 ist so angeordnet und ausgebildet, dass über ihn eine Temperatur von Förderflüssigkeit in dem Förderraum 40 ermittelbar ist.

Bevorzugterweise sitzt der Temperatursensor 42 außerhalb des Förderraums 40, um die Strömung von Förderflüssigkeit nicht zu beeinflussen.

Der Förderraum 40 ist durch eine Wandung 44 begrenzt. Bei einem Ausführungsbeispiel sitzt der Temperatursensor 42 außerhalb des Förderraums 40 an der Wandung 44. Er sitzt beispielsweise direkt an einer Außenseite der Wandung 44 oder in einem kleinen Abstand zu dieser Außenseite. Er steht insbesondere in thermischem Kontakt mit der Wandung 44.

Es ist bevorzugt vorgesehen, dass, wie in Figur 2 durch das Bezugszeichen 46 angedeutet, der Temperatursensor an dem Motorgehäuse 26 sitzt und dabei in thermischem Kontakt zu dem Förderraum 40 steht.

Die Förderpumpe 16 weist eine Auswertungseinrichtung 48 (Figur 1) auf. Der Temperatursensor 42 bzw. 46 stellt seine Temperatursignale der Auswertungseinrichtung 48 zur Verfügung. Die Auswertungseinrichtung 48 ist beispielsweise in die Motorschaltung 28 integriert.

Die Förderpumpe 16 hat ein Gehäuse 50. Innerhalb des Gehäuses 50 ist das Laufrad 36 angeordnet. Der Elektromotor 20 ist zumindest teilweise innerhalb des Gehäuses 50 angeordnet. Der Temperatursensor 42 bzw. 46 ist innerhalb des Gehäuses 50 angeordnet.

Bei einem Ausführungsbeispiel weist das Gehäuse 50 als ersten Gehäuseteil ein Pumpengehäuse 51 und als zweiten Gehäuseteil das Motorgehäuse 26 auf.

Das Motorgehäuse 26 sitzt an dem Pumpengehäuse 51. In dem Pumpengehäuse 51 ist das Laufrad 36 positioniert. Der Temperatursensor 42 sitzt in dem Gehäuse 50 und dabei in dem Pumpengehäuse 51. Der Temperatursensor 46 sitzt in dem Motorgehäuse 26.

Für eine einfache Demontierbarkeit des Elektromotors 20 von dem Pumpengehäuse 51 ist es vorteilhaft, wenn der Temperatursensor 46 verwendet wird. In diesem Falle müssen keine Kabelverbindungen für den Temperatursensor in dem Pumpengehäuse 51 verlaufen.

Unter Zugrundelegung der Signale des Temperatursensors 42 bzw. 46 lässt sich durch die Auswertungseinrichtung 48 ermitteln, ob der Förderraum 40 und damit die Leitung 12 durchströmt wird oder nicht.

Erfindungsgemäß ist dem Temperatursensor (beispielsweise dem Temperatursensor 42) eine Temperiereinrichtung 52 zugeordnet. Die Temperiereinrichtung 52 sorgt dafür, dass in einer Umgebung 54 des Temperatursensors 42 definierte Temperaturverhältnisse vorliegen. Dadurch können zeitliche Temperaturänderungen direkt Temperaturänderungen der Förderflüssigkeit in dem Förderraum 40 zugeordnet werden.

Bei einer Ausführungsform umfasst die Temperiereinrichtung 52 eine Temperierkammer 56. Diese weist ein Gehäuse 58 insbesondere aus einem thermisch isolierenden Material auf. Der Temperatursensor 42 (bzw. 46) ist dann in dem Gehäuse 58 angeordnet und steht dabei in thermischem Kontakt mit dem Förderraum 40. Beispielsweise ist er direkt an der Wandung 44 angeordnet oder es ist eine Wärmeleitungsverbindung zwischen der Wandung 44 und dem Temperatursensor 42 bzw. 46 und dem Gehäuse 58 vorgesehen.

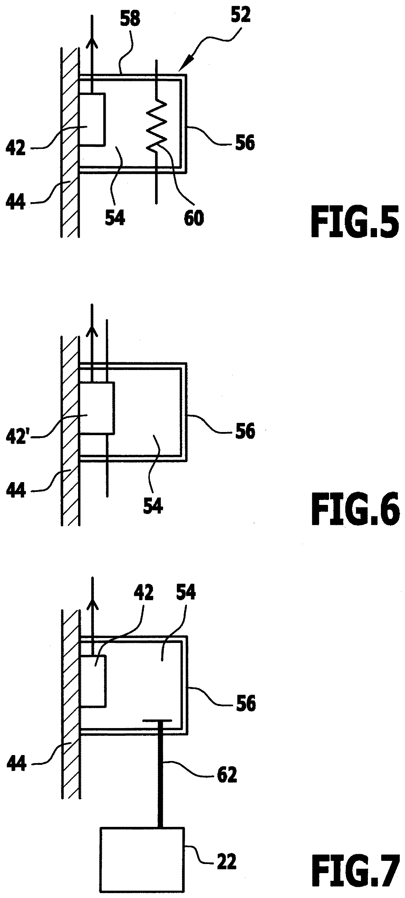

Bei einer Ausführungsform (Figur 5) umfasst die Temperiereinrichtung 52 mindestens ein Heizelement 60 und insbesondere Widerstandsheizelement, welches in der Temperierkammer 56 angeordnet ist. Durch entsprechende elektrische Beaufschlagung des Heizelements 60 kann eine definierte Temperatur in der Temperierkammer 56 und damit in der Umgebung 54 des Temperatursensors 42 bzw. 46 eingestellt werden. Die eingestellte Temperatur ist in Relation zu den zu erwartenden Temperaturen der Förderflüssigkeit in der Leitung 12 gewählt.

Bei einer weiteren Ausführungsform, welche in Figur 6 schematisch gezeigt ist, ist ein Temperatursensor 42' vorgesehen, welcher in einer Temperierkammer 56 angeordnet ist. Die Temperierkammer ist grundsätzlich gleich ausgebildet wie oben beschrieben. Für gleiche Elemente werden gleiche Bezugszeichen verwendet.

Der Temperatursensor 42' ist so ausgebildet, dass in ihn ein Heizelement integriert ist. Er ist damit Teil der Temperiereinrichtung 52. Der Temperatursensor 42' ist beispielsweise als NTC-(Heißleiter) ausgebildet, welcher auch wärmeerzeugend ist aufgrund eines Stromdurchflusses.

Bei einem weiteren Ausführungsbeispiel (Figur 7) ist wiederum eine Temperierkammer entsprechend der Temperierkammer 56 vorgesehen. Als Temperatursensor ist der Temperatursensor 42 bzw. 46 vorgesehen.

Von einer oder mehreren Spulen des Stators 22 des Elektromotors 20 der Förderpumpe 16 führen eine oder mehrere Wärmeleitungsverbindungen 62 zu der Temperierkammer 56 und insbesondere in die Temperierkammer 56. Abwärme von einer oder mehreren Spulen des Stators 42 kann dabei zu einer definierten Temperierung der Umgebung 54 des Temperatursensors 42 bzw. 46 genutzt werden, um die Temperatur in der Umgebung des Temperatursensors 42 bzw. 46 bei fehlender Durchströmung auf eine Temperatur zu erhöhen, die über der Temperatur des Fördermediums liegt. Dadurch kann eine einsetzende Durchströmung sicher erkannt werden.

Es ist beispielsweise auch möglich, dass die Auswertungseinrichtung 48 ein Temperierglied 64 umfasst. Das Temperierglied 64 sorgt dafür, dass die Förderpumpe 16 betrieben wird (das heißt das Laufrad 36 rotiert wird), ohne dass ein Durchfluss von Förderflüssigkeit durch den Förderraum 40 erfolgt. Dadurch lassen sich definierte Temperaturbedingungen in der Umgebung 54 des Temperatursensors 42 bzw. 46 herstellen. Das Temperierglied 64 funktioniert dann als Temperiereinrichtung 52.

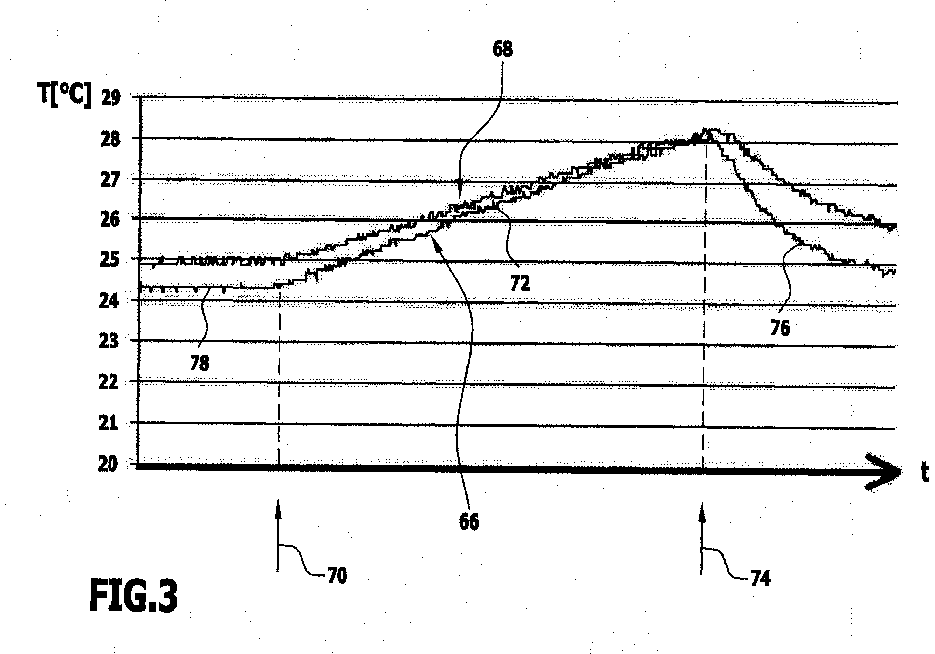

In Figur 3 ist ein Diagramm von Temperaturwerten in ihrer zeitlichen Abhängigkeit gezeigt, wobei die Kurve 66 Temperaturwerten entspricht, welche mit dem Temperatursensor 42 ermittelt werden, und die Kurve 68 Temperaturwerten entspricht, welche mit dem Temperatursensor 46 ermittelt werden.

Bei der entsprechenden Messung war die Förderpumpe 16 aktiviert, das heißt in Betrieb.

Zu einem Zeitpunkt 70 wurde der Schieber 14 geschlossen.

Durch den geschlossenen Schieber 14 kann keine Förderflüssigkeit (insbesondere Wasser) durch die Leitung 12 mehr strömen. Der Förderraum 40 kann dann auch nicht mehr durchströmt werden. Da die Förderpumpe 16 aktiviert ist, rotiert der Rotor 24 und damit das Laufrad 36 in dem Förderraum 40. Die elektrische Leistung wird in Wärme gewandelt, was zu einer Erwärmung der Förderflüssigkeit in dem Förderraum 40 führt. Die Förderflüssigkeit durchströmt den Förderraum 40 nicht mehr, das heißt tritt nicht mehr an einem Einlass ein und an einem Auslass aus, sondern strömt innerhalb des Förderraums 40. Das Laufrad 36 dreht sich, wobei ohne externen Durchfluss die Förderpumpe 10 so viel Förderflüssigkeit umpumpt, wie bei maximalem Pumpendruck durch einen Saugmundspalt von der Druckseite wieder auf die Saugseite gelangt. Dies führt zu einem zeitlichen Temperaturanstieg 72. Dieser Temperaturanstieg ist durch die Auswertungseinrichtung 48 detektierbar.

Es hat sich gezeigt, dass dieser Temperaturanstieg 72 mindestens näherungsweise linear über der Zeit ist.

Zu einem Zeitpunkt 74 wurde der Schieber wieder geöffnet. Es kann dann Förderflüssigkeit durch die Leitung 12 fließen und damit auch durch den Förderraum 40 fließen. Dies führt zu einem zeitlichen Temperaturabfall 76. Dieser zeitliche Temperaturabfall 76, welcher allein durch Pumpenparameter und insbesondere durch die thermische Masse der Förderpumpe 16 und die Leistungsaufnahme bei Nulldurchsatz bestimmt ist, ist wiederum durch die Auswertungseinrichtung 48 detektierbar.

Die Förderpumpe 16 kann dadurch gewissermaßen mit "Bordmitteln" erkennen, ob eine Durchströmung der Leitung 12 erfolgt oder nicht. Sie weist einen nicht-mechanischen Strömungswächter auf.

Dies wiederum kann dazu benutzt werden, um die Förderpumpe 16 selber anzusteuern.

Wenn beispielsweise ein zeitlicher Temperaturanstieg 72 durch die Auswertungseinrichtung 48 detektiert wird, dann ist es vorgesehen, dass diese ein Deaktivierungssignal erzeugt, um die Förderpumpe 16 zu deaktivieren, das heißt die Förderpumpe 16 abzuschalten. Das Abschalten bedeutet, dass der Rotor 24 nicht mehr relativ zu dem Stator 22 rotiert wird.

Die Abschaltung kann dabei sofort erfolgen, wenn ein zeitlicher Temperaturanstieg 72 detektiert wird, oder kann erfolgen, wenn eine bestimmte (obere) Temperaturschwelle erreicht wird. Diese Temperaturschwelle wiederum kann direkt über den Temperatursensor 42 bzw. 46 ermittelt werden, oder die entsprechende Zeitdauer kann insbesondere unter Zugrundelegung eines linearen zeitlichen Temperaturanstiegs 72 berechnet werden.

Vor dem Zeitpunkt 70 ist in Figur 3 ein Zustand 78 mit näherungsweise konstanter Temperatur gezeigt. Dieser Zustand 78 entspricht einem Zustand, bei dem die Förderpumpe 16 aktiviert ist, das heißt Förderflüssigkeit pumpt, welche bei geöffnetem Schieber 14 durch die Leitung 12 austritt. Die Temperatur im Zustand 78 entspricht der Temperatur, mit welcher Förderflüssigkeit durch ein Wasserwerk bereitgestellt wird.

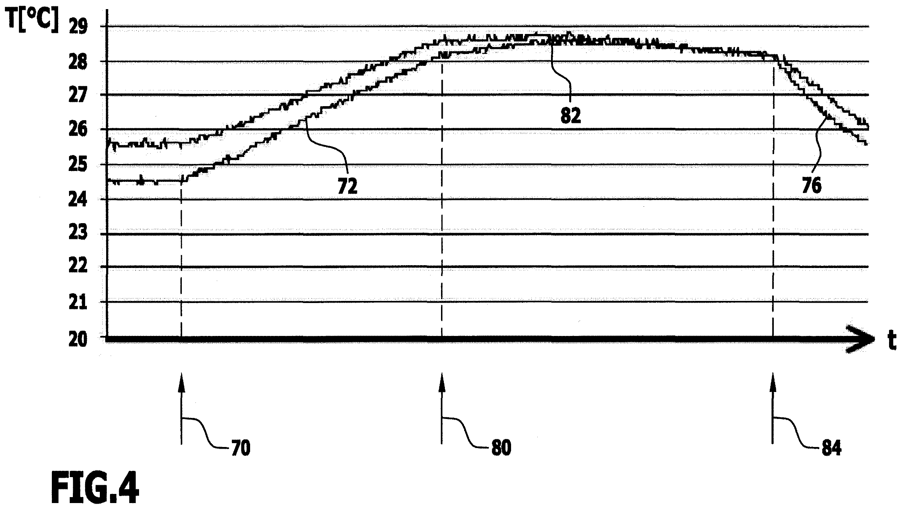

In Figur 4 ist ein ähnliches Diagramm wie in Figur 3 gezeigt. Zu einem Zeitpunkt entsprechend dem Zeitpunkt 70 wird der Schieber 14 geschlossen. Es erfolgt dann der zeitliche Temperaturanstieg 72.

Zu einem späteren Zeitpunkt 80 wird dann die Förderpumpe 16 deaktiviert, das heißt das Laufrad 36 rotiert nicht mehr in dem Förderraum 40. Es ergibt sich ein leichter zeitlicher Temperaturabfall 82, welcher insbesondere auf natürliche Konvektion zurückzuführen ist.

Zu einem späteren Zeitpunkt 84 wird der Schieber 14 wieder geöffnet. Es tritt dann der Temperaturabfall entsprechend dem Temperaturabfall 76 ein.

Wie in dem Diagramm gemäß Figur 3 sind die Kurven auf unterschiedliche Positionen des Temperatursensors zurückzuführen. Bei der unteren Kurve stellt der Temperatursensor 42 seine Messdaten bereit, bei der oberen Kurve der Temperatursensor 46.

Wie aus dem Diagramm gemäß Figur 4 ersichtlich ist, kann die Auswertungseinrichtung detektieren, wenn ein Temperaturabfall 76 ausgehend von einem Zustand erfolgt, bei dem die Förderpumpe 16 deaktiviert ist. Der Temperaturabfall 76 nach dem Zeitpunkt 84 ist erheblich stärker als der allmähliche Temperaturabfall 82. Die Auswertungseinrichtung 48 kann erkennen, wenn der Schieber 14 wieder geöffnet wird. Die Förderpumpe 16 kann dies mit "Bordmitteln" erkennen.

Die Auswertungseinrichtung 48 generiert dann, wenn sie einen Temperaturabfall 76 nach einem nur allmählichen Temperaturabfall 82 detektiert, ein Aktivierungssignal für die Förderpumpe 16, um diese wieder zu betreiben, das heißt um das Laufrad 36 in dem Förderraum 40 zu rotieren.

Die erfindungsgemäße Förderpumpe 16 funktioniert wie folgt:
In die Förderpumpe 16 ist (mindestens) ein Temperatursensor 42 bzw. 46 integriert. Dieser Temperatursensor 42 bzw. 46 ist insbesondere im Zusammenhang mit der Temperiereinrichtung 52 so angeordnet und ausgebildet, dass er keinen wesentlichen Temperaturänderungen in seiner Umgebung 54 unterliegt, welche nicht auf Temperaturänderungen der Förderflüssigkeit in dem Förderraum 40 zurückführbar sind.

Wie anhand der Diagramme gemäß Figur 3 und 4 ersichtlich ist, kann aus der zeitlichen Entwicklung der Temperatursignale des Temperatursensors 42 bzw. 46 die Auswertungseinrichtung 48 detektieren, ob eine Durchströmung des Förderraums 40 (zwischen einem Einlass und einem Auslass) und damit eine Durchströmung der Leitung 12 erfolgt. Die Auswertungseinrichtung 48 kann erkennen, ob der Schieber 14 geschlossen oder offen ist. Es ist dadurch ein Strömungswächter bereitgestellt.

Die Auswertungseinrichtung 48 generiert ein Deaktivierungssignal für die Förderpumpe 16, wenn sie erkennt, dass der Schieber 14 geschlossen ist, das heißt keine Durchströmung der Leitung 12 erfolgt. Dies ist insbesondere aus einem zeitlichen Temperaturanstieg 72, welcher insbesondere mindestens näherungsweise linear ist, detektierbar.

Die Auswertungseinrichtung 48 stellt der Förderpumpe 16 ein Aktivierungssignal bereit, wenn sie erkennt, dass bei deaktivierter Förderpumpe 16 eine Durchströmung der Leitung 12 möglich ist.

Insbesondere aus einem Temperaturabfall 76, welcher zeitlich schneller ist als ein Temperaturabfall 82 bei deaktivierter Förderpumpe 16, ist durch die Auswertungseinrichtung 48 erkennbar, dass der Schieber 14 geöffnet wurde und dass die Förderpumpe 16 aktiviert werden kann, das heißt wieder Förderflüssigkeit durch den Förderraum 40 hindurch und damit in der Leitung 12 befördert werden kann.

Die erfindungsgemäße Förderpumpe 16 erkennt, ob eine Durchströmung der Leitung 12 erfolgt oder nicht. Sie kann sich dadurch gewissermaßen selber einschalten bzw. ausschalten, ohne dass zusätzliche mechanische Mittel notwendig sind.

Durch die erfindungsgemäße Förderpumpe 16 lässt sich eine Druckerhöhung beispielsweise an einem Brauchwassersystem 10 bereitstellen, ohne dass zusätzliche mechanische Mittel notwendig sind.

### Bezugszeichenliste

- 10: Brauchwassersystem
- 12: Leitung
- 14: Schieber
- 16: Förderpumpe
- 18: Heizgerät
- 20: Elektromotor
- 22: Stator
- 24: Rotor
- 26: Motorgehäuse
- 28: Motorschaltung
- 30: Schaltungsgehäuse
- 32: Lagerschale
- 34: Lagerkörper
- 36: Laufrad
- 38: Rotationsachse
- 40: Förderraum
- 42: Temperatursensor
- 42': Temperatursensor
- 44: Wandung
- 46: Temperatursensor
- 48: Auswertungseinrichtung
- 50: Gehäuse
- 51: Pumpengehäuse
- 52: Temperiereinrichtung
- 54: Umgebung
- 56: Temperierkammer
- 58: Gehäuse
- 60: Heizelement
- 62: Wärmeleitungsverbindung
- 64: Temperierglied
- 66: Kurve
- 68: Kurve
- 70: Zeitpunkt
- 72: Zeitlicher Temperaturanstieg
- 74: Zeitpunkt
- 76: Temperaturabfall
- 78: Zustand
- 80: Zeitpunkt
- 82: Temperaturabfall
- 84: Zeitpunkt

## Patentansprüche

1. Förderpumpe zur Druckerhöhung in einer Leitung (12), umfassend einen Förderraum (40) für Förderflüssigkeit, mindestens einen Temperatursensor (42; 46), welcher in der Förderpumpe (16) angeordnet ist, dem Förderraum (40) zugeordnet ist, in thermischem Kontakt mit dem Förderraum (40) steht und durch den eine Temperatur von Förderflüssigkeit in dem Förderraum (40) ermittelbar ist, eine Temperiereinrichtung (52), welche dem mindestens einen Temperatursensor (42; 46) zugeordnet ist, und durch welche definierte Temperaturverhältnisse in einer Umgebung (54) des mindestens einen Temperatursensors (42; 46) herstellbar sind, wobei die Temperiereinrichtung (52) durch eine oder mehrere Spulen eines Motors (20) der Förderpumpe (16) gebildet ist oder eine oder mehrere Spulen des Motors (20) umfasst, wobei eine Wärmeleitungsverbindung (62) zwischen der oder den Spulen und der Umgebung (54) des mindestens einen Temperatursensors (42; 46) vorliegt, die Förderpumpe weiter umfassend eine Auswertungseinrichtung (48), an welche der mindestens eine Temperatursensor (42; 46) signalwirksam gekoppelt ist und welche dazu ausgebildet ist, aus Daten des mindestens einen Temperatursensors (42; 46) zu ermitteln, ob Förderflüssigkeit den Förderraum (40) durchströmt oder nicht, **dadurch gekennzeichnet, dass** die Auswertungseinrichtung (48) ferner dazu ausgebildet ist, aus einer zeitlichen Entwicklung von Temperatursignalen, welche der mindestens eine Temperatursensor (42; 46) innerhalb der Förderpumpe (16) bereitstellt, zu detektieren, ob ein Durchfluss stattfindet oder nicht.

2. Förderpumpe nach Anspruch 1, **dadurch gekennzeichnet, dass** durch die Auswertungseinrichtung (48) Aktivierungssignale zur Aktivierung eines Pumpenbetriebs und Deaktivierungssignale zur Deaktivierung eines Pumpenbetriebs bereitgestellt sind.

3. Förderpumpe nach Anspruch 1 oder 2, **gekennzeichnet durch** ein Gehäuse (50), in welchem der Förderraum (40) angeordnet ist, wobei der mindestens eine Temperatursensor (42; 46) in dem Gehäuse (50) angeordnet ist.

4. Förderpumpe nach einem der vorangehenden Ansprüche, **dadurch gekennzeichnet, dass** der Motor (20) zum Antrieb eines Laufrads (36) ausgebildet ist, wobei der mindestens eine Temperatursensor (46) an einem Motorgehäuse (26) angeordnet ist.

5. Förderpumpe nach einem der vorangehenden Ansprüche, **dadurch gekennzeichnet, dass** der mindestens eine Temperatursensor (42) an oder in der Nähe einer Wandung (44) des Förderraums (40) angeordnet ist.

6. Förderpumpe nach einem der vorangehenden Ansprüche, **dadurch gekennzeichnet, dass** der mindestens eine Temperatursensor (42') eine Temperiereinrichtung umfasst und insbesondere dass die Temperiereinrichtung in den mindestens einen Temperatursensor (42') integriert ist.

7. Förderpumpe nach einem der vorangehenden Ansprüche, **dadurch gekennzeichnet, dass** die Temperiereinrichtung (52) durch mindestens ein Heizelement (60) und insbesondere Widerstandsheizelement gebildet ist oder mindestens ein Heizelement (60) umfasst.

8. Förderpumpe nach einem der vorangehenden Ansprüche, **dadurch gekennzeichnet, dass** die Auswertungseinrichtung (48) ein Temperierglied (64) umfasst, welches für einen Betrieb der Förderpumpe (16) ohne Durchfluss von Förderflüssigkeit für eine bestimmte Zeitdauer sorgt, um definierte Temperaturbedingungen in der Umgebung (54) des mindestens einen Temperatursensors (42; 46) herzustellen.

9. Förderpumpe nach einem der vorangehenden Ansprüche, **dadurch gekennzeichnet, dass** die Temperiereinrichtung (52) eine Temperierkammer (56) umfasst, in welcher der mindestens eine Temperatursensor (42; 46) angeordnet ist.

10. Förderpumpe nach einem der vorangehenden Ansprüche, **dadurch gekennzeichnet, dass** die Auswertungseinrichtung (48) mindestens eine der folgenden Detektionsmöglichkeiten bereitstellt: Durchfluss von Förderflüssigkeit, fehlender Durchfluss von Förderflüssigkeit.

11. Förderpumpe nach Anspruch 10, **dadurch gekennzeichnet, dass** ein
fehlender Durchfluss von Förderflüssigkeit aus einem zeitlichen Temperaturanstieg (72) und insbesondere mindestens näherungsweise linearen zeitlichen Temperaturanstieg detektierbar ist oder detektiert ist.

12. Förderpumpe nach Anspruch 10 oder 11, **dadurch gekennzeichnet, dass**
ein Durchfluss an Förderflüssigkeit nach einer Phase ohne Durchfluss durch eine zeitliche Temperaturänderung und insbesondere durch einen zeitlichen Temperaturabfall (76) detektierbar ist oder detektiert ist.

13. Förderpumpe nach einem der Ansprüche 10 bis 12, **dadurch gekennzeichnet, dass** bei Detektion eines fehlenden Durchflusses die Auswertungseinrichtung (48) ein Deaktivierungssignal für einen Pumpenbetrieb der Förderpumpe (16) generiert.

14. Förderpumpe nach Anspruch 13, **dadurch gekennzeichnet, dass** das Deaktivierungssignal sofort nach Detektion des fehlenden Durchflusses generiert wird, oder das Deaktivierungssignal generiert wird, wenn eine bestimmte Temperaturschwelle erreicht ist.

15. Förderpumpe nach einem der Ansprüche 10 bis 14, **dadurch gekennzeichnet, dass** bei Detektion eines Durchflusses an Förderflüssigkeit nach einer Phase eines fehlenden Durchflusses die Auswertungseinrichtung (48) ein Aktivierungssignal für einen Pumpenbetrieb der Förderpumpe (16) generiert.

16. Verfahren zum Betreiben der Förderpumpe gemäß einem der vorangehenden Ansprüche, welche an eine Leitung (12) angeschlossen ist, bei dem eine Abwärme des Motors der Förderpumpe die Umgebung des mindestens einen Temperatursensors temperiert, und bei
dem die Auswertungseinrichtung (48) aus der zeitlichen Entwicklung von Temperatursignalen, welche der mindestens eine Temperatursensor (42; 46) innerhalb der Förderpumpe (16) bereitstellt, detektiert, ob ein Durchfluss in der Leitung stattfindet oder nicht.

17. Verfahren nach Anspruch 16,
**dadurch gekennzeichnet, dass** die Auswertungseinrichtung (48) Aktivierungssignale zur Aktivierung eines Pumpenbetriebs der Förderpumpe (16) und Deaktivierungssignale zur Deaktivierung eines Pumpenbetriebs bereitstellt.

18. Verfahren nach Anspruch 17,
**dadurch gekennzeichnet, dass** die Auswertungseinrichtung (48) bei deaktivierter Förderpumpe (16), wenn ein Durchfluss durch die Leitung (12) detektiert wird, ein Aktivierungssignal für die Förderpumpe (16) generiert.

19. Verfahren nach Anspruch 17 oder 18,
**dadurch gekennzeichnet, dass** die Auswertungseinrichtung (48) bei aktivierter Förderpumpe (16), wenn ein fehlender Durchfluss in der Leitung (12) detektiert wird, ein Deaktivierungssignal für die Förderpumpe (16) generiert.

20. Verfahren nach einem der Ansprüche 16 bis 19,
**dadurch gekennzeichnet,**
**dass** eine Durchströmung der Leitung (12) aus einem zeitlichen Temperaturabfall (76), gemessen in der Förderpumpe (16), detektiert wird.

21. Verfahren nach einem der Ansprüche 16 bis 20,
**dadurch gekennzeichnet,**
**dass** ein fehlender Durchfluss in der Leitung (12) aus einem zeitlichen und insbesondere mindestens näherungsweise zeitlich linearen Temperaturanstieg (72), gemessen in der Förderpumpe (16), detektiert wird.

22. Verfahren nach einem der Ansprüche 16 bis 21,
**dadurch gekennzeichnet,**
**dass** die Temperiereinrichtung (52) bei Unterschreiten einer bestimmten Temperatur aktiviert wird.

23. Verwendung der Förderpumpe (16) gemäß einem der Ansprüche 1 bis 15 Druckerhöhung in einer Leitung (12) eines Brauchwassersystems (10).

## Claims

1. Feed pump for increasing the pressure in a line (12), comprising a feed chamber (40) for feed fluid, at least one temperature sensor (42; 46) which is arranged in the feed pump (16), is assigned to the feed chamber (40), is in thermal contact with the feed chamber (40) and by means of which a temperature of feed fluid in the feed chamber (40) can be determined, a temperature control device (52) which is assigned to the at least one temperature sensor (42; 46) and by means of which defined temperature conditions can be produced in an environment (54) of the at least one temperature sensor (42; 46), the temperature control device (52) being formed by one or more coils of a motor (20) of the feed pump (16) or comprising one or more coils of the motor (20), a heat conduction connection (62) being present between the coil or coils and the environment (54) of the at least one temperature sensor (42; 46), the feed pump further comprising an evaluation device (48) to which the at least one temperature sensor (42; 46) is coupled in a signal-effective manner and which is designed to determine from data of the at least one temperature sensor (42; 46) whether or not conveying fluid is flowing through the feed chamber (40), **characterized in that** the evaluation device (48) is further designed to detect whether or not a flow is taking place from a temporal development of temperature signals which the at least one temperature sensor (42; 46) provides within the conveying pump (16).

2. Feed pump according to claim 1, **characterized in that** activation signals for activating a pump operation and deactivation signals for deactivating a pump operation are provided by the evaluation device (48).

3. Feed pump according to claim 1 or 2, **characterized by** a housing (50) in which the feed chamber (40) is arranged, wherein the at least one temperature sensor (42; 46) is arranged in the housing (50).

4. Feed pump according to one of the preceding claims, **characterized in that** the motor (20) is designed to drive an impeller (36), wherein the at least one temperature sensor (46) is arranged on a motor housing (26).

5. Feed pump according to any one of the preceding claims, **characterized in that** the at least one temperature sensor (42) is arranged on or near a wall (44) of the feed chamber (40).

6. Feed pump according to one of the preceding claims, **characterized in that** the at least one temperature sensor (42') comprises a temperature control device and in particular **in that** the temperature control device is integrated into the at least one temperature sensor (42').

7. Feed pump according to one of the preceding claims, **characterized in that** the temperature control device (52) is formed by at least one heating element (60) and in particular resistance heating element or comprises at least one heating element (60).

8. Feed pump according to one of the preceding claims, **characterized in that** the evaluation device (48) comprises a temperature control member (64) which provides for operation of the feed pump (16) without flow of feed fluid for a certain period of time in order to establish defined temperature conditions in the environment (54) of the at least one temperature sensor (42; 46).

9. Feed pump according to one of the preceding claims, **characterized in that** the temperature control device (52) comprises a temperature control chamber (56) in which the at least one temperature sensor (42; 46) is arranged.

10. Feed pump according to any of the preceding claims, **characterized in that** the evaluation device (48) provides at least one of the following detection options: Flow of conveying fluid, Lack of flow of conveying fluid.

11. Feed pump according to claim 10, **characterized in that** a lack of flow of feed fluid can be detected or is detected from a temperature rise over time (72) and in particular at least approximately linear temperature rise over time.

12. Feed pump according to claim 10 or 11, **characterized in that** a flow of feed liquid after a phase without flow is detectable or detected by a change in temperature over time and in particular by a temperature drop (76) over time.

13. Feed pump according to any one of claims 10 to 12, **characterized in that**, upon detection of a lack of flow, the evaluation device (48) generates a deactivation signal for pump operation of the feed pump (16).

14. Feed pump according to claim 13, **characterized in that** the deactivation signal is generated immediately after detection of the lack of flow, or the deactivation signal is generated when a certain temperature threshold is reached.

15. Feed pump according to any one of claims 10 to 14, **characterized in that**, upon detection of a flow of delivery fluid after a phase of no flow, the evaluation device (48) generates an activation signal for pump operation of the delivery pump (16).

16. Method for operating the feed pump according to any one of the preceding claims, which is connected to a line (12), wherein a waste heat of the motor of the feed pump tempers the environment of the at least one temperature sensor, and wherein the evaluation device (48) detects from the temporal development of temperature signals provided by the at least one temperature sensor (42; 46) within the feed pump (16) whether a flow in the line takes place or not.

17. Method according to claim 16, **characterized in that** the evaluation device (48) provides activation signals for activating a pump operation of the feed pump (16) and deactivation signals for deactivating a pump operation.

18. Method according to claim 17, **characterized in that** the evaluation device (48) generates an activation signal for the feed pump (16) when a flow through the line (12) is detected and the feed pump (16) is deactivated.

19. Method according to claim 17 or 18, **characterized in that** the evaluation device (48) generates a deactivation signal for the feed pump (16) when a lack of flow in the line (12) is detected and the feed pump (16) is activated.

20. Method according to any one of claims 16 to 19, **characterized in that** a flow through the line (12) is detected from a temperature drop (76) over time measured in the feed pump (16).

21. Method according to any one of claims 16 to 20, **characterized in that** a lack of flow in the line (12) is detected from a temporal and in particular at least approximately temporally linear temperature rise (72) measured in the feed pump (16).

22. Method according to any one of claims 16 to 21, **characterized in that** the temperature control device (52) is activated when the temperature falls below a specific temperature.

23. Use of the feed pump (16) according to any one of claims 1 to 15 for pressure boosting in a line (12) of a domestic water system (10).

## Revendications

1. Pompe de circulation pour l'augmentation de la pression dans une conduite (12), comprenant un compartiment de pompage (40) pour du liquide pompé, au moins un capteur de température (42 ; 46), lequel est disposé dans la pompe de circulation (16), est attribué au compartiment de pompage (40), est en contact thermique avec le compartiment de pompage (40) et par lequel une température du liquide pompé peut être déterminée dans le compartiment de pompage (40), un dispositif de thermorégulation (52), lequel est attribué à au moins un capteur de température (42 ; 46) et par lequel des rapports de température définis peuvent être établis dans un environnement (54) d'au moins un capteur de température (42 ; 46), sachant que le dispositif de thermorégulation (52) est formé par une ou plusieurs bobines d'un moteur (20) de la pompe de circulation (16) ou comprend une ou plusieurs bobines du moteur (20), sachant qu'une liaison thermo-conductrice (62) existe entre la ou les bobines et l'environnement (54) d'au moins un capteur de température (42 ; 46), la pompe de circulation comprenant en plus un dispositif d'évaluation (48) auquel est couplé de façon réactive aux signaux au moins un capteur de température (42 ; 46) et lequel est constitué pour déterminer à partir des données d'au moins un capteur de température (42 ; 46), si du liquide pompé traverse ou non le compartiment de pompage (40)
**caractérisée en ce que**
le dispositif d'évaluation (48) est constitué en plus pour détecter, à partir d'une évolution dans le temps des signaux de température, que délivre au moins un capteur de température (42 ; 46) à l'intérieur de la pompe de circulation (16), si un débit a lieu ou non.

2. Pompe de circulation selon la revendication 1, **caractérisée en ce que** des signaux d'activation sont fournis par le dispositif d'évaluation (48) pour l'activation d'un fonctionnement de pompage et des signaux de désactivation pour la désactivation d'un fonctionnement de pompage.

3. Pompe de circulation selon la revendication 1 ou 2, **caractérisée par** un boîtier (50) dans lequel est disposé le compartiment de pompage (40), sachant qu'au moins un capteur de température (42 ; 46) est disposé dans le boîtier (50).

4. Pompe de circulation selon l'une quelconque des revendications précédentes, **caractérisée en ce que** le moteur (20) est constitué pour entraîner une roue (36), sachant qu'au moins un capteur de température (46) est disposé sur un carter de moteur (26).

5. Pompe de circulation selon l'une quelconque des revendications précédentes, **caractérisée en ce qu'**au moins un capteur de température (42) est disposé sur ou à proximité d'une paroi (44) du compartiment de pompage (40).

6. Pompe de circulation selon l'une quelconque des revendications précédentes, **caractérisée en ce qu'** au moins un capteur de température (42') comprend un dispositif de thermorégulation et en particulier **en ce que** le dispositif de thermorégulation est intégré dans au moins un capteur de température (42').

7. Pompe de circulation selon l'une quelconque des revendications précédentes, **caractérisée en ce que** le dispositif de thermorégulation (52) est formé par au moins un élément de chauffage (60) et en particulier un élément de chauffage à résistance ou comprend au moins un élément de chauffage (60).

8. Pompe de circulation selon l'une quelconque des revendications précédentes, **caractérisée en ce que** le dispositif d'évaluation (48) comprend un organe de thermorégulation (64), lequel veille à un fonctionnement de la pompe de circulation (16) sans débit de liquide pompé pour une durée de temps déterminée pour établir des conditions de température définies dans l'environnement (54) d'au moins un capteur de température (42 ; 46).

9. Pompe de circulation selon l'une quelconque des revendications précédentes, **caractérisée en ce que** le dispositif de thermorégulation (52) comprend une chambre de thermorégulation (56) dans laquelle est disposé au moins un capteur de température (42 ; 46).

10. Pompe de circulation selon l'une quelconque des revendications précédentes, **caractérisée en ce que** le dispositif d'évaluation (48) fournit au moins une des possibilités de détection suivantes : débit du liquide pompé, absence de débit du liquide pompé.

11. Pompe de circulation selon la revendication 10, **caractérisée en ce qu'**une absence de débit de liquide pompé peut être détecté ou est détecté à partir d'une hausse de température (72) temporelle et en particulier à partir d'une hausse de température temporelle au moins approximativement linéaire.

12. Pompe de circulation selon la revendication 10 ou 11, **caractérisée en ce qu'**un débit en liquide pompée peut être détecté ou est détecté après une phase sans débit par une variation de température temporelle et en particulier par une chute de température temporelle (76) .

13. Pompe de circulation selon l'une quelconque des revendications 10 à 12, **caractérisée en ce que** lors de la détection d'une absence de débit, le dispositif d'évaluation (48) génère un signal de désactivation pour un fonctionnement de pompage de la pompe de circulation (16).

14. Pompe de circulation selon la revendication 13, **caractérisée en ce que** le signal de désactivation est généré immédiatement après détection de l'absence de débit ou le signal de désactivation est généré, lorsqu'un seuil de température déterminé est atteint.

15. Pompe de circulation selon l'une quelconque des revendications 10 à 14, **caractérisée en ce que** lors de la détection d'un débit en liquide pompé après une phase d'une absence de débit, le dispositif d'évaluation (48) génère un signal d'activation pour un fonctionnement de pompage de la pompe de circulation (16).

16. Procédé destiné à faire fonctionner la pompe de circulation selon l'une quelconque des revendications précédentes, laquelle est raccordée à une conduite (12), pour lequel une chaleur perdue du moteur de la pompe de circulation régule en température l'environnement d'au moins un capteur de température et pour lequel le dispositif d'évaluation (48) détecte, à partir de l'évolution temporelle de signaux de température, que délivre au moins un capteur de température (42 ; 46) à l'intérieur de la pompe de circulation (16), si un débit a lieu ou non dans la conduite.

17. Procédé selon la revendication 16, **caractérisé en ce que** le dispositif d'évaluation (48) fournit des signaux d'activation pour activer un fonctionnement de pompage de la pompe de circulation (16) et des signaux de désactivation pour désactiver un fonctionnement de pompage.

18. Procédé selon la revendication 17, **caractérisé en ce que** le dispositif d'évaluation (48) avec la pompe de circulation (16) désactivée, génère un signal d'activation pour la pompe de circulation (16), lorsqu'un débit est détecté à travers la conduite (12) .

19. Procédé selon la revendication 17 ou 18, **caractérisé en ce que** le dispositif d'évaluation (48) avec la pompe de circulation (16) activée, génère un signal de désactivation pour la pompe de circulation (16), lorsqu'une absence de débit est détectée dans la conduite (12).

20. Procédé selon l'une quelconque des revendication 16 à 19, **caractérisé en ce qu'**un écoulement à travers la conduite (12) est détecté à partir d'une chute de température temporelle (76), mesurée dans la pompe de circulation (16).

21. Procédé selon l'une quelconque des revendication 16 à 20, **caractérisé en ce qu'**une absence de débit est détectée dans la conduite (12) à partir d'une hausse de température (72) temporelle et en particulier au moins approximativement linéaire dans le temps, mesurée dans la pompe de circulation (16).

22. Procédé selon l'une quelconque des revendication 16 à 21, **caractérisé en ce que** le dispositif de thermorégulation (52) est activé lors d'un dépassement inférieur d'une température déterminée.

23. Utilisation de la pompe de circulation (16) selon l'une quelconque des revendications 1 à 15 pour l'augmentation de pression dans une conduite (12) d'un système d'eau utilitaire (10).
